Europäisches Patentamt

European Patent Office

Office européen des brevets

(19)

(11) **EP 1 156 255 A1**

(12) **EUROPEAN PATENT APPLICATION**
published in accordance with Art. 158(3) EPC

(43) Date of publication:
**21.11.2001 Bulletin 2001/47**

(21) Application number: **99968432.7**

(22) Date of filing: **02.12.1999**

(51) Int Cl.⁷: **F16L 23/00**, F16L 19/00,
F16L 21/00

(86) International application number:
**PCT/RU99/00465**

(87) International publication number:
**WO 00/32975 (08.06.2000 Gazette 2000/23)**

(84) Designated Contracting States:
**AT BE CH CY DE DK ES FI FR GB GR IE IT LI LU
MC NL PT SE**
Designated Extension States:
**AL LT LV MK RO SI**

(30) Priority: **03.12.1998 RU 98121779**

(71) Applicants:
• **Yakobashvili, Zurab Andreevich
  Moscow, 121099 (RU)**
• **Pokrovsky, Dmitry Jurievich
  Moscow, 123362 (RU)**

• **Kogan, Boris Markovich
  Moscow, 109387 (RU)**

(72) Inventor: **KOGAN, Boris Markovich
  Moscow, 109387 (RU)**

(74) Representative: **Herden, Andreas F.
  Blumbach, Kramer & Partner GbR
  Patentanwälte
  Alexandrastrasse 5
  65187 Wiesbaden (DE)**

(54) **METHOD FOR SEALING A REMOVABLE PIPE FITTING, VARIANTS, DEVICE FOR REALISING THE SAME AND SEALING ELEMENT**

(57) The inventions relate to pipe connections mostly for extreme conditions of high and low pressure, deep vacuum, high and low temperatures, in corrosive media and so on, and can be applied to automotive, aviation, aerospace, nuclear, shipbuilding and other industries. Pressurization is achieved by using an elastic insert that is properly positioned when put inside or outside a centering adapter allowing them both to remain in contact during their reciprocal movement, so that the alignment is ensured and a transverse shifting of the centering adapter is prevented. While pulling the pipes together, equalization of the contact pressures on the torus-shaped projections is maintained. In the second variant, not less than two flat split adjustment rings are installed from either side of the centering adapter, pulling the pipes together is done up to a moment when entire contact is reached between the faces of the conjugated pipelines, adjustment rings and faces of the centering adapter. The seal is equipped with a centering adapter that is put coaxially to the elastic insert allowing their contact during reciprocal axial movement.

Claimed herewith are 4 independent and 10 dependent claims.

EP 1 156 255 A1

**Description**

Technology field

The inventions relate to pipe connections and can be applied in various fields of engineering mainly for coupling pipelines that work under high and low pressure, deep vacuum, high and low temperatures, in corrosive media and other extreme conditions where pressurizing devices should meet enhanced technical requirements. The device used for pressurizing is of the "metal-to-metal" type.

Description of the prior art

Known is a method to pressurize demountable pipeline connections (see Inventor's Certificate USSR N 1416788, F16L19/00, 1988) that incorporates centering of pipes being coupled, placing, in the gap between them, a seal in the form of two coaxial bushings contacting one another, setting-up a fixed clearance between the pipes by ensuring an appropriate size relation between the two bushings, pulling the pipes towards each other until a tight contact is reached between the pipe faces and one of the bushings, and fixing the pipes in this position. The disadvantage of the said method is the difficulty of its realization because the said method requires special equipment to heat-up one of the bushings in order to seal the connection, and it fails to provide a necessary reliability, because it requires that the bushings size relation and the coupling operation temperature range are thoroughly maintained to ensure the required contact pressure, besides the realization of the said method requires additional processing of the existing pipe flanges and other modifications.

Known is a method to pressurize demountable pipeline connections (see the description of the Russian Federation Patent № 2044207, F16L23/00, 1995) that comprises centering of conjugated pipes, putting, into the gap between them, a sealing element in the form of an elastic insert with torus-shaped bosses at each face of the insert which bear against contact surfaces of the inlets of the pipes, setting-up a fixed clearance between the pipes, center-positioning of the elastic insert, pulling the pipes together to a required clearance between them while simultaneously exerting pressure on the insert both in the radial and axial directions by means of sealing surfaces of pipe inlets until they engage in all-round circular contact with the torus-shaped protuberances of the elastic insert and until a plastic deformation is obtained on the sealing surfaces of the pipe inlets along the contact line that is caused by elasticity deformation forces of the elastic insert being subjected to compression in the process of pulling the pipes together, and while tightening the pipes it must be ensured that a contact pressure is evenly distributed on the torus-shaped projections of the elastic insert by moving it coaxially with regard to a centering adapter under the impact of the sealing surfaces of the pipe inlets. This method, as compared to the previous analogue, does not require special equipment to employ it and proves more reliable with the coupling being repeatedly assembled and disassembled. Besides, the elastic insert provides a linear annular contact with the sealing surfaces of the pipe inlets thus improving pressurization of the joint. In addition the said method ensures even distribution of contact pressures on torus-shaped bosses of the elastic insert when the pipes are being pulled together. However, the said method has a number of disadvantages. This realization of the said method requires the use of special shaped flanges for the pipe inlets, and this makes application of the said method with the existing systems more complicated and expensive. The technique, used therein to center-position the elastic insert by means of cylindrical and tapered grooves, cut in flanges, does not ensure stable centering of the elastic insert when the pipes are tightened, which may result in excessive inclination of a cross-section of torus-shaped bosses of the elastic insert with regard to the longitudinal axis of the insert and in the appearance of contact pressure difference at both faces of the elastic insert. By that, circular imprints left on the sealing surfaces of the pipe inlets as traces of annular lines of their contact with the elastic insert will not coincide as the coupling is repeatedly assembled and disassembled, and this may gradually cause a leakage through a coupling. Another disadvantage of the said method is the use of catch-clamps for setting-up a fixed clearance between the pipes since the longitudinal compression forces, that may appear under operational conditions and caused by any kind of deformation, would be directly transferred to the torus-shaped bosses of the elastic insert first raising the contact pressure and then decreasing it, when stretching forces take over; this may also result in the loss of pressurization and in the reduction of the joint's life-time.

Known is a seal to pressurize demountable pipe connections (see the Federal Republic of Germany Patent application N 2416808, F16 J15/08; F16 L23/04, 1977) that incorporates a sealing element in the form of a metal ring coaxially to which, either outside or inside it, a centering ring is installed which prevents the sealing element from moving in a cross-sectional direction. The centering ring is made so as to provide a radial clearance. This seal does not ensure connection tightness in the course of repeated assembly operations since after every too strong deformation of a sealing element a new one should be put in place. Furthermore, this seal does not ensure either a high degree of tightness dependability of the connection, when it is operating under extreme conditions, or invariability of contact pressure in operation.

Known is a seal to pressurize demountable connection (see Patent PCT No WO 83/03883, F 16 L17/06; F 16 J15/08, 1983) that incorporates a sealing element in the form of a metal insert, elastic both in radial and axial directions, which has torus-shaped bosses at each end of the insert bearing against sealing surfaces of conjugated elements. The said seal allows all-round linear contact of the torus-shaped projections of the sealing insert to the sealing surfaces of the conjugated elements. However, a contact pressure in this seal does not depend on the gap between the conjugated elements and it is determined only by the shape, dimensions and material of the elastic insert, thus making the seal extremely unreliable in service due to the insufficiently developed contact pressure. An attempt to make the elastic insert more rigid to obtain higher tightness cannot solve the problem since, owing to size deviations of the elastic insert and of the surfaces being sealed, this attempt will either cause deformation of the said surfaces or become insufficient to ensure the required degree of pressurization. In the said design the elastic insert has a centering element that prevents its longitudinal movements, although the latter could help to evenly distribute contact pressure in the process of assembling the connection.

Known is a demountable pipe connection sealing element (see Inventor's Certificate, USSR, №511469, F 16 L 19/025; L 27/067, 1976), embodied in the form of an elastic insert shaped as a convex lens. Such sealing element does not ensure adequate tightness of the connection due to low contact pressure that is admissible for an element of this shape because of its relatively low strength characteristics, and it requires that special grooves are cut in flanges of conjugated pipes thus excluding its application in existing systems without their special modification.

Known is a sealing element to pressurize demountable pipe connections (see USA Patent №4214763, F16 L 23/00, 1980), embodied as an elastic insert, the outer surface of which has a number of tapered sections. The disadvantage of this element is the "tapered-surface-to-tapered-surface" sealing principle which fails to ensure the required contact throughout the entire surface due to the lack of roundness of the conjugated parts. The gaps thus appearing are taken up by plastic deformation of the sealing element and this requires considerable forces to pull the pipes together. In this case, due to the said deformations it is required to replace a sealing element during every consecutive assembly of a connection. Furthermore, flanges of the conjugated pipes should have special grooves, the surfaces of which bear against the outer surfaces of the sealing element tapered sections.

The nearest analogue chosen as a prior art method, used to substantiate engineering solution of the proposed method for pressurizing demountable pipe connections ( and one embodiment of it) is the method described in Russian Federation Patent №2073164 (F 16 L 23/00, 1997); this method incorporates centering of conjugated pipes, installing, in the gap between them, a sealing element in the form of an elastic insert with torus-shaped bosses at the ends of the insert which bear against sealing edges of pipe inlets, setting-up a fixed clearance between pipe ends, centering the elastic insert, pulling the pipes together to a required clearance between them with simultaneous compression of the insert in both radial and axial directions by sealing edges of the pipe inlets until the edges engage in all-round annular contact with torus-shaped projections of the sealing insert and plastic deformation of the sealing edges of the inlets is obtained along the contact line under the impact of the elasticity deformation forces that appear in the elastic insert when it is being compressed in the course of tightening the pipes, fixing the pipes in this position. The said method, as compared to the previous analogue (Russian Federation Patent No 2044207), provides simpler and more reliable centering of the elastic insert owing to an inner surface of a cylindrical groove in the flanges and also assures accurate setting-up of a fixed clearance between the pipes because the pipes are only being pulled together until the faces of the conjugated pipes engage in a tight contact with side surfaces of a radial protruding portion that is located in the middle of the insert among the torus-shaped bosses.

The said sealing method allows to relieve the elastic insert from loads of "longitudinal compression - stretching" type which affect the pipelines in service. However, the disadvantage of the said method is its inability to make contact pressure on the torus-shaped bosses of the elastic insert evenly distributed because the elastic insert movement, coaxially to the pipes under the impact of the sealing edges, can only take place until pipe end faces engage in a tight contact with the faces of the radial protuberance, and since that moment contact pressures at each face of the insert would differ from each other owing to a possible difference in geometrical measurements taken from each face of the insert to the radial intermediate portion. Besides, if a leak is detected in the assembled connection, the elastic insert must be changed for another one that can better fit in terms of size proportions, although this may not always be done easily. Another limitation is that the radial protruding portion makes it difficult to employ the said method for pressurizing clutch type joints. Dependability of the method for pressurization of pipe-joints is also reduced by an ambiguity factor. Situations may take place, wherein, because of a certain size relations in a particular connection, sealing will be reached not through tight contact between sealing edges of the pipe inlets and torus-shaped bosses of the elastic insert but within a contact zone of end surfaces of the conjugated pipes with side faces of the radial protruding portion of the elastic insert. In this case, even if tightness check of the assembled joint shows no leakage, life-time of the connection will turn out to be shorter as compared to the conventional configuration, and a possibility of a consequent use of the coupling will not be guaranteed.

The closest analogue chosen as a prior art device and used to substantiate the engineering embodiment of the proposed seal for pressurization of demountable pipe connections, is the seal presented in

Russian Federation Patent №2073164 (F 16 L 23/00, 1997); this seal incorporates a sealing element in the form of an insert which is elastic in both radial and axial directions and which has protruding bosses at either end which bear against sealing surfaces of the inlets of the conjugated pipes. This seal ensures linear circular contact of the sealing edges of the pipe inlets with torus-shaped bosses of the elastic insert and emerging of plastic deformation on the inlets sealing edges along the line of contact, thus raising reliability of the sealing. Besides, an essential part of the contact pressure is provided by elasticity deformation forces thus decreasing forces required to pressurize a joint. At the same time, it is a disadvantageous feature of this seal that equalization of contact pressures on the torus-shaped bosses of the elastic insert, obtained by means of moving the insert under the impact of the pipe inlet sealing edges, is only in effect up to a moment when the end faces of the conjugated pipes engage in a tight contact with the side surfaces of the radial protruding portion that is located in the central part of the insert among the torus-shaped bosses, whereupon there is a possibility of contact pressure difference to appear because of distance difference from the faces of the elastic insert to the side surfaces of the radial intermediate portion, which may cause the connection tightness failure especially when using a seal for repairs of systems being in actual operation.

The closest analogue chosen as a prior art device and used to substantiate engineering embodiment of the proposed sealing element for pressurization of demountable pipe connection, is the sealing element presented in the Russian Federation Patent №2044207 (F 16 L 23/00, 1995) which is constructed as an insert, that is elastic both in radial and axial directions, with torus-shaped bosses at the ends of the insert and with an annular compensating portion in the middle of the insert. This sealing element does not require big pressures to provide necessary tightness level and it allows multiple usage, but it needs that the inlet flanges of the conjugated pipes have a special shaping, it is of limited utility for clutch type couplings, it does not ensure sufficient dependability for a longer time in service as well as for pipeline high pressure conditions, and it causes unwanted turbulence of the working media passing through the pipeline.

Disclosure of the inventions

A technical task to be resolved by the proposed package of inventions is the creation of a method to pressurize demountable pipe connections, a device to implement this method and a sealing element which would ensure leak-proof, repeatedly usable, quickly demountable pipeline connection that does not require significant efforts to assemble and pressurize, that is highly reliable in a wide pressure and temperature range, that can withstand corrosive media, that has a high producibility and is readily applicable in most of the existing pipeline systems without any modifications.

The above tasks are being solved as follows.

According to the known method of pressurizing demountable pipeline connections that incorporates centering of the conjugated pipes, installing in the gap between them a sealing element in the form of an elastic insert with torus-shaped projections at the end faces that bear against sealing edges of the pipe inlets, setting-up a fixed clearance between the pipe ends, centering the elastic insert, pulling the pipes together up to a required clearance with simultaneous compression of the insert both in radial and axial directions by the sealing edges of the pipe inlets until they engage into an all-round tight contact with torus-shaped bosses of the elastic insert and plastic deformation on the sealing edges of the inlets becomes emergent along the line of the contact under the impact of the elasticity deformation forces developed inside the elastic insert when it is subjected to compression while the pipes are being tightened, and fixing the pipes in this position; a novel feature in accordance with the first proposed variant is that centering of the elastic insert is effected by installing it inside or outside a centering adapter, which is put in the gap between the conjugated pipes coaxially to the elastic insert and allows the insert and the adapter to remain in contact during their reciprocal axial movements to maintain center-positioning and to prevent the adapter radial movements; and in the course of pulling the pipes together alignment is effected of the contact pressures on the torus-shaped bosses of the elastic insert by moving it coaxially in relation to the centering adapter under the impact of the sealing edges of the pipe inlets up to a moment, when tight contact of the end faces of the conjugated pipes with the faces of the elastic insert is reached.

In accordance with the second proposed variant of the method, the main technical tasks are being, in principle, solved in the same way, however, an additional task is being solved of controlling the connection tightness and, in case there is a leak, of restoring the tightness without changing a sealing element.

As distinct from the known pressurisation method, that comprises centering of the conjugated pipes, putting in the gap between them a sealing element, constructed in the form of an elastic insert with torus-shaped bosses at the ends of the insert, which bear against sealing edges of the pipe inlets, setting-up a fixed clearance between the pipes, centering the elastic insert, pulling the pipes together up to a required clearance between them, while simultaneously compressing the insert both in radial and axial directions by the sealing edges of the pipe inlets until they engage in all-round annular contact with the torus-shaped projections of the elastic insert, and plastic deformation on the sealing edges of the pipe inlets becomes emergent along the line of contact under the impact of elasticity deformation forces, arising inside the elastic insert as a result of its compression in the course of tightening the pipes, and fixing the pipes in this position; a novel feature in accordance with the second variant is that centering of the elastic insert is effected by installing it inside or outside the centering adapter, which is placed in the gap between the conjugated pipes coaxially to the elastic insert and allows them both to remain in contact during their reciprocal longitudinal movements in order to ensure centre-positioning and prevent transverse movements of the centering adapter, whereas setting-up a fixed clearance between the pipes is done by flat split adjusting rings which, prior to pulling the pipes together, are placed between the faces of the conjugated pipes and faces of the centering adapter so that the number of the adjusting rings is not less than two from either side of the centering adapter, and while pulling the pipes together equalisation of contact pressures on the torus-shaped bosses of the elastic insert is provided by moving it coaxially to the centering adapter under the impact of the sealing edges of the pipe inlets until a tight contact is established between the faces of the conjugated pipes, the adjusting rings and faces of the centering adapter, and after the pipes are fixed in this position connection tightness check-up is done, and should a leakage be detected the joint is to be dismantled, contact pressures at the torus-shaped bosses of the elastic insert are to be increased by decreasing the fixed clearance between the pipes by means of removing one or several adjusting rings, and said connection sealing operations are to be repeated until a required tightness level is reached with at least one adjusting ring remaining on each side of the centering adapter.

In the known seal for pressurizing demountable pipe connections that comprises a sealing element constructed in the form of an insert, which is elastic both in radial and axial directions and equipped with torus-shaped bosses at the end faces of the insert that bear against sealing edges of the inlets of the conjugated pipes a novel feature is that the seal incorporates a centering adapter, installed coaxially to the elastic insert allowing them both to remain in contact during their reciprocal longitudinal movement.

Furthermore, a distance between the end faces of the elastic insert can be larger than the distance between the sealing edges of the inlets of the conjugated pipes.

Furthermore, the elastic insert can be made as having one or more annular ridges which convexities are directed towards the longitudinal axis of the insert, whereas the ridges are situated between the end torus-shaped bosses in a symmetrical manner in relation to a cross-cut plane passing through the middle of the insert.

Furthermore, the torus-shaped bosses at the end faces of the elastic insert can be made of a material which hardness is higher than that of the sealing edges of the pipe inlets.

Furthermore, the seal can be equipped with flat split adjustment rings made of a material which hardness is not less than that of the material of the centering adapter, and the adjustment rings being installed coaxially to the centering adapter between its faces and the end faces of the conjugated pipes.

Furthermore, centering adapter can be made of the same material as that of the conjugated pipes.

Furthermore, centering adapter can be installed outside the elastic insert allowing its internal surface to stay in contact with some part of the outer surface of the elastic insert during their reciprocal longitudinal movement, whereas distance between the faces of the centering adapter is less than the distance between the faces of the elastic insert and inner diameter of the centering adapter is larger than diameter of the sealing edges of the pipe inlets.

Furthermore, an integral distance between faces of the centering adapter and thickness of the adjustment rings that are installed at each face of the centering adapter can be less than the distance between end faces of the elastic insert.

Furthermore, centering adapter can be installed inside the elastic insert, so that part of its outer surface can maintain contact with the inner surface of the elastic insert during their reciprocal axial movement, whereas the distance between inner faces of the centering adapter is larger than the distance between end faces of the elastic insert and outer diameter of the centering adapter is less than diameter of the sealing edges of the pipe inlets.

Furthermore, centering adapter can be constructed as having two complementary portions, one of which is made in the form of an adapter ring with a flange rigidly secured at one of its ends and the other portion made in the form of a removable flange installed at the free end of the adapter, making it possible that faces of both flanges can bear against each other.

Furthermore, outer surface of the centering adapter can be constructed as having a radial annular projection with the cylindrical outer surface to bear against the inner surface of the elastic insert, whereas the projection is located symmetrically with regard to a cross-cut plane going through the middle of the insert, and outer diameter of its transverse cross-section is less than the diameter of the sealing edges of the pipe inlets.

The technical embodiment, claimed herewith as a sealing element to pressurize demountable pipe connection, is a part of the seal for pressurizing demountable pipe connections and it can be applied not only to fit this but also other devices, or singly.

In a known sealing element to pressurize demountable pipe connections constructed in the form of an insert, that is elastic both in radial and axial directions and is equipped with torus-shaped bosses at the ends of the insert and an annular compensating portion in the middle of the insert a novel feature is that generating line of the outer surface of the elastic insert in its longitudinal cross-section has configuration of two arcs with their convexities directed away from the axis of the insert and linked by an arc with its convexity directed towards axis of the insert.

The aggregate of formulated features makes it possible to create a method aimed to seal demountable pipe connections that, on the one hand, would ensure high degree of pressurization with a multiple repetition of assembly/disassembly cycles and with minor tightening efforts, thus assuring pressurization that can be reliably maintained for a long time under various in-service conditions, and on the other hand, the one that would combine simplicity, mass-production capability and applicability in existing pipeline systems without any modification.

Aligning the elastic insert in accordance with the proposed method by means of a special centering adapter, that is installed in the gap between conjugated pipes coaxially to the elastic insert, whereby both of them can remain in contact during their reciprocal axial movement in order to maintain centering and prevent transverse movement of the centering adapter, ensures that the centering is provided during the entire procedure of pulling the pipes together up to a fixed clearance. By that, there is no need of any figured grooves in the pipe flanges to assure the elastic insert centering. Placing the centering adapter inside or outside the elastic insert allows to employ the method for various types of pipeline connections: flanged, coupled, etc.

Furthermore, it becomes possible to evenly distribute contact pressure on the torus-shaped bosses of the elastic insert by moving it coaxially to the centering adapter under the impact of the sealing edges of the pipe inlets during the entire process of pulling the pipes together until faces of the conjugated pipes engage in tight contact with faces of the elastic insert, thus guaranteeing reliable pressurization of the joint for repeated assembling and relatively low accuracy requirements both to manufacturing of the parts used and to quality of the assembling.

A tight contact between faces of the conjugated pipes and faces of the centering adapter ensures invariable magnitude of the contact pressure on the torus-shaped bosses of the elastic insert, should external impacts on the pipelines occur, thus increasing a life-time of the coupling and assuring its tightness.

In accordance with the second variant, the use of flat split adjustment rings for setting-up a fixed clearance between the pipes makes it possible, apart from the above mentioned technical result, to confidently establish actual means through which pressurization has been achieved: either in a specified manner - whereby sealing edges of the pipe inlets engage in an all-round full contact with torus-shaped projections of the elastic insert and plastic deformation on the sealing edges of the inlets becomes emergent along the line of contact under the impact of elasticity deformation forces developed in the elastic insert subjected to compression in the process of tightening the pipes, or in a non-specified manner - due to tight contact engagement of faces of the conjugated pipes with the faces of the adjustment rings and of those with the faces of the centering adapter. Non-specified pressurization may cause the connection tightness failure during operation, thus decreasing reliability of the method and giving no leak-proof guarantee for consequent connection assembly cycles. Yet another advantage of the second variant is that during connection pressurization procedure a preset magnitude of the fixed clearance can be regulated, thus making it possible, in case a required tightness level is not achieved in the assembled joint, to dismantle it and to increase contact pressure on torus-shaped bosses of the elastic insert, so that fixed clearance between the pipes is decreased by removing one or two adjustment rings. That makes sealing technology essentially cheaper and simpler, because the change of a fixed clearance between the pipes does not require substituting the centering adapter, what is especially important when the method is applied in mass production. Furthermore, this variant of the sealing method is easier to adopt for application in existing pipeline systems without their modification, especially for a prolonged operation, because it allows to occasionally check the connection and, should the joint show signs of wear and tightness failure, to restore pressurization by removing adjustment rings. At that, there should remain at least one adjustment ring from either side of the centering adapter.

Should it still be required to remove remaining adjustment rings from one or both sides of the centering adapter, even then the method can provide the technical result same as in the first variant.

Use in the proposed pipe coupling seal of the centering adapter, that is installed coaxially to the elastic insert, so that they can remain in contact during reciprocal axial movement, ensures reliable centering of the elastic insert and equalization of contact pressures on torus-shaped projections of the elastic insert during entire procedure of tightening and assembling the joint, thus adding to reliability of the proposed seal and its multi-purpose capability, as it permits to use the seal for various types of connections: flanged, coupled and etc. in existing pipeline systems without their modification in terms of making figured grooves and the like.

The elastic insert embodiment, wherein the distance between its faces is larger than that between sealing edges of pipe inlets of the conjugated pipelines, ensures the creation of necessary contact pressures and dependable sealing of the pipe joint.

The elastic insert embodiment, wherein it is equipped with one or more annular ridges with their convexities directed towards longitudinal axis of the insert, so that those ridges are placed between torus-shaped end bosses symmetrically in relation to cross-section plane, that goes through the middle of the insert, is expedient to employ when greater elasticity of the insert in radial and axial directions is required, for instance, in case the insert has to be done with thick walls or from a harder material, what may be required by the seal operational conditions, and, first of all, if the seal has a centering adapter disposed outside the elastic insert. Symmetrical location of the ridges is explained by the need to ensure equality of elastic properties of the insert at its both end faces.

Making torus-shaped portions at the ends of the elastic insert from a material, that is harder than the material of the sealing edges of the pipe inlets, provides reliable functioning of the seal being repeatedly used, because the sealing edges would not leave residual deformations on the torus-shaped bosses, while the torus-shaped bosses during operation would flatten existing surface defects of the sealing edges just improving contact between them.

Incorporating into the design of the seal of flat split adjustment rings, being installed coaxially to the centering adapter between its faces and faces of the conjugated pipes, permits to check pressurization in accordance with a specified variant of the seal operation, namely, through engagement of the sealing edges of the pipe inlets in all-round circular contact with torus-shaped projections of the elastic insert and plastic deformation on the inlets sealing edges becomes emergent along line of contact, but not through tight contact engagement of the faces of the conjugated pipelines with faces of adjustment rings and of the latter with faces of the centering adapter. Therewith, gaps that adjustment rings have, ensure monitoring of gas outflow under non-specified variant of pressurizing the joint.

That raises reliability and service durability of the seal and guarantees maintaining of its characteristics for repeated assembly cycles. Furthermore, adjustment rings allow to make fixed clearance between the pipelines smaller by removing one or several rings, and by doing this to increase, if necessary, contact pressures for the sake of getting a required tightness without changing centering adapter or elastic insert, thus bringing down operation costs and easily adopting the seal to existing pipeline systems without their modifications.

Making the adjustment rings from material, the hardness of which is no less than that of the centering adapter, prevents plastic deformation of the rings that may cause failure of tight contact between faces of the conjugated pipelines, adjustment rings and centering adapter, when the joint is working within great temperature overfalls.

Making the centering adapter from the same material as that of the conjugated pipelines raises inservice time of the demountable pressurized connection and its reliability because this does not produce a bimetal pair which could bring about the difference of electric potentials and accelerated corrosion.

Installing the centering adapter outside the elastic insert, so that during the reciprocal axial movement a contact is maintained between the adapter inner surface and part of the insert outer surface, makes it possible to employ the seal in flanged couplings without modifying the latter, ensures equality of contact pressures and retains a reliable centering of the elastic insert throughout the entire procedure of sealing the joint.

Centering adapter and elastic insert dimensional correlation, whereby the distance between the faces of centering adapter is less than that between the faces of the elastic insert whilst the inner diameter of the centering adapter is larger than that of the sealing edges of the pipe inlets ensures reliable contact of the sealing edges of the pipe inlets with faces of torus-shaped projections of the elastic insert for pressurizing the joint.

Selection of dimensional correlation, whereby an integral magnitude of the distance between faces of the centering adapter and an overall thickness of adjustment rings installed at both faces of the centering adapter is less than the distance between end surfaces of the elastic insert ensures reliable contact of the sealing edges of the pipe inlets with torus-shaped bosses of the elastic insert for pressurizing the connection in case it incorporates adjustment rings.

Installing the centering adapter inside the elastic insert, whereby during reciprocal axial movement the contact is ensured between the part of the adapter outer surface and the inner surface of the elastic insert provides for the possibility to use the seal in box joints without adjustment of the latter, for the equality of contact pressures and sustained centering of the elastic insert throughout the entire procedure of sealing the joint.

The selection of a dimensional correlation of a centering adapter and an elastic insert, whereby the distance between inner end surfaces of the centering adapter is larger than that between end surfaces of the elastic insert and outer diameter of the centering adapter is less than that of the sealing edges of the pipe inlets, ensures a dependable contact of the sealing edges of the pipe inlets with face torus-shaped projections of the elastic insert for pressurizing the joint.

The embodiment of the centering adapter as of two complimentary parts, whereby one of them is made in the form of a bushing with a flange that is rigidly set at one of its ends and the other part in the form of removable flange installed at the free end of the insert with possibility of contact with the flange surface, simplifies the seal manufacturing technology and its assembly.

Making on the external surface of the centering adapter of an annular radial protruding portion with cylindrical outer surface, that bears against inner surface of the elastic insert and located symmetrically in regard to cross-sectional plane passing through the middle of the insert with external diameter of its cross-section being less than that of the sealing edges of the pipe inlets, ensures dependable centering of the elastic insert and required contact pressures, when the centering adapter is installed inside the elastic insert.

Embodiment of the sealing element for pressurizing demountable pipe connections, wherein generating line of outer surface of the elastic insert in its cross-section has a form of two arcs cambered in regard to longitudinal axis of the insert and linked by a concave arc with its convexity directed towards the axis of the insert, presents a universal sealing element which can be utilized either as a component of the proposed seal for tightening demountable pipe joints in combination with centering adapter installed outside the elastic insert or individually mainly in instances, whereby distance between inlet sealing edges of the conjugated pipes is not too big and faces of the pipes already have internal circular grooves which may ensure dependable centering of the elastic insert while tightening the pipelines.

Furthermore, the form that is chosen for the sealing element is of high mass-product capability, it allows to make the sealing insert with a required combination of both elastic and strength properties, permits to use the sealing element in coupled connections and ensures high pressurization reliability.

Brief description of the drawings

The essence of inventions is illustrated, by way of example, in the accompanying drawings:

Fig.1    - Longitudinal cross-section of a demountable pipe connection and a seal for its pressurization with external installation of centering adapter and centering provided by torus-shaped bosses of the elastic insert

Fig. 2    - Longitudinal cross-section of a demountable pipe connection and a seal for its pressurization with external installation of centering adapter and with adjustment rings

Fig. 3    - Longitudinal cross-section of a demountable pipe connection and a seal for its pressurization with external installation of centering adapter and centering by the middle portion of the elastic insert

Fig. 4    - Adjustment ring

Fig. 5    - Longitudinal cross-section of a demountable pipe connection and a seal for its pressurization with external installation of centering adapter and elastic insert with ridge

Fig. 6    - Longitudinal cross-section of a demountable pipe connection and a seal for its pressurization with internal installation of centering adapter

Fig. 7    - Longitudinal cross-section of a demountable pipe connection and a seal for its pressurization with internal installation of centering adapter and with adjustment rings

Fig. 8    - Longitudinal cross-section of a demountable pipe connection and of a sealing element

Fig. 9    - Longitudinal cross-section of a demountable pipe connection and a seal for its pressurization taken at the moment of initial contact between sealing edges of pipe inlets and torus-shaped bosses of the elastic insert

Fig. 10    - Longitudinal cross-section of a demountable pipe connection and of a seal for its pressurization at the moment of complete sealing.

Variants of embodiments

According to the first variant, the proposed method is implemented through the following sequence of actions.

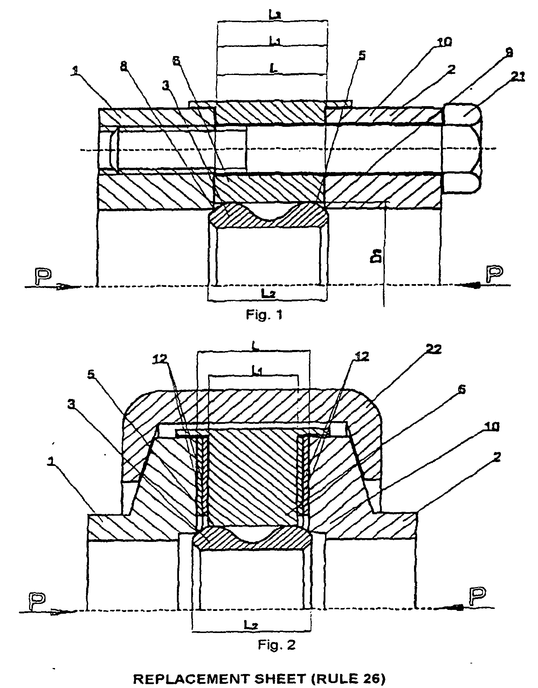

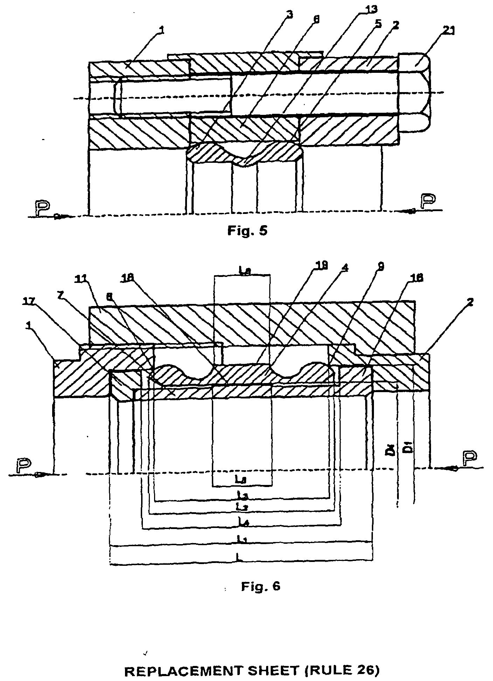

Sealing operation of the joint begins with the centering of the conjugated pipelines 1, 2 ( Fig. 1, 6). The operation can be done either manually or using specified gadgets that are good for carrying out pressurization in operating conditions and for particular pipeline dimensions. Then the sealing element, made in the form of elastic insert 3, 4 with torus-shaped projections 5 at the faces of the insert, is installed inside or outside centering adapter 6, 7 which together with elastic insert 3, 4 is installed in the gap between conjugated pipelines 1, 2 coaxially to one another allowing both elements to remain in. contact during their reciprocal axial movement in order to maintain the centering and prevent centering adapter 6, 7 from shifting in transverse plane. Therewith, choosing distance $L_1$ between the faces of the centering adapter, a fixed clearance between the pipes is set up, ensuring an appropriate longitudinal effort of compressing the elastic insert that, as a result of impact of sealing edges 8, 9 of the pipe inlets on torus-shaped bosses 5 of the elastic insert, causes compression of the bosses both in radial and axial directions and accordingly rise of counter-action forces, that appear owing to the insert elasticity and that create necessary contact pressures on torus-shaped projections of the elastic insert, thus ensuring pressurization of the joint. Following that, by exerting pressure P, pipelines 1, 2 are pulled together, whereby centering elastic insert 3, 4 and equalization of contact pressures are maintained using free sliding of elastic insert 3, 4 along centering adapter 6, 7 under the impact of sealing edges 8, 9 of the pipe inlets until faces of conjugated pipes 1, 2 engage in a tight contact with faces of centering adapter 6, 7. In this position the pipes are rigidly fixed by any known types of joining: flanged 10, coupled 11, etc.

The proposed method for pressurizing demountable pipe connections, as per the second variant, is implemented through the following operation sequence.

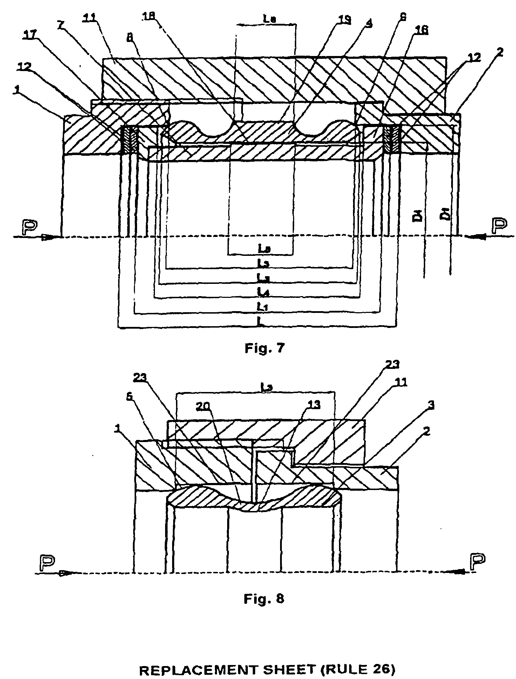

Pressurization of the joint starts with the centering of conjugated pipelines 1, 2 (Fig. 2, 7). The operation may be executed either manually or by using gadgets specified to carry out tightening in working conditions and depending on pipeline dimensions. Then the sealing element, made in the form of elastic insert 3, 4 with torus-shaped projections 5 at the faces of the insert, is installed inside or outside centering adapter 6, 7 which together with the elastic insert 3, 4 is placed in the gap between conjugated pipes 1, 2 coaxially one to another, allowing them both to contact each other during their reciprocal axial movement to maintain center-positioning and prevent the centering adapter from shifting in transverse plane.

In so doing, accurate setting-up of a fixed magnitude of clearance L between the pipelines is done by means of flat split adjustment rings 12, with at least two rings for each face of the centering adapter, are installed between the faces of centering adapter 6, 7 and pipelines 1, 2. Magnitude of clearance L between the pipelines should be sufficient to provide a required longitudinal force to compress elastic insert 3, 4 that, under the impact of sealing edges 8, 9 of the pipe inlets on torus-shaped bosses 5 of the elastic insert, cause compression of the bosses both in radial and axial directions and accordingly rise of counter-action forces that arise owing to the insert elasticity and that create appropriate contact pressures on torus-shaped projections 5 of the elastic insert, thus ensuring pressurization of the joint. Thereupon, by exerting force P the pipelines are pulled together, concurrently, due to free sliding of the elastic insert along centering adapter 6, 7 under the impact of sealing edges 8, 9 of the pipe inlets, centering of elastic insert 3, 4 and equalizing contact pressures is provided until faces of conjugated pipes 1, 2 engage in a tight contact with adjustment rings 12 and faces of centering adapter 6, 7. Then the pipelines are fixed by any known types of joining: flanged 10, coupled 11, etc., and tightness of the connection is checked up by means of the standard equipment. For example, should it be required to provide a high pressurization level, verification may be done through gaseous Helium hydrostatic test using Helium leak-detector to check up air-tightness of the joint. Should tightness failure be detected, the joint is to be dismantled, contact pressures on torus-shaped projections of the elastic insert enhanced by decreasing fixed magnitude of clearance between the pipes at the expense of removing one or several rings, whereupon said pipeline sealing operations are repeated until required tightness level is reached. Therewith, at each end face of the centering adapter at least one adjustment ring should remain. If not a single ring is left from any side of the centering adapter, that would mean that the first variant of the method is taking place. The second variant of the method is especially suitable to employ when it is necessary to monitor the conditions in which the connection is operating under sustained running. In such case demountable pipe connections scheduled check-ups are permanently carried out, and if a tightness failure is detected then the joint is disassembled and a repeated procedure of the connection pressurization in accordance with the proposed method is done, whereby contact pressures in the joint are to be increased by removing one or several adjustment rings.

The proposed seal for pressurizing demountable pipeline connections contains sealing element in the form of the insert 3, 4, that is elastic both in radial and axial directions and has torus-shaped projections 5 at the ends of the insert, and centering adapter 6, 7, that is installed coaxially to the elastic insert and allows their contact during reciprocal axial movement. Distance $L_2$ between faces of the elastic insert is selected to be wider than distance $L_3$ between sealing edges 8, 9 of the inlets of the conjugated pipes, which is determined by fixed magnitude of clearance L between the pipes, as being preset by distance $L_1$ between faces of the centering adapter.

Torus-shaped projections 5 of the elastic insert bear against sealing edges 8, 9 of the inlets of the conjugated pipelines, and faces of centering adapter 6, 7 bear, when the joint is assembled, with faces of the conjugated pipelines 1, 2. It is expedient that generating line of the outer surface of torus-shaped bosses 5 at faces of elastic insert 3, 4 is given a form of an arc of circle in the insert's longitudinal cross-section, though use of other forms, for example arc of ellipse, can not be excluded.

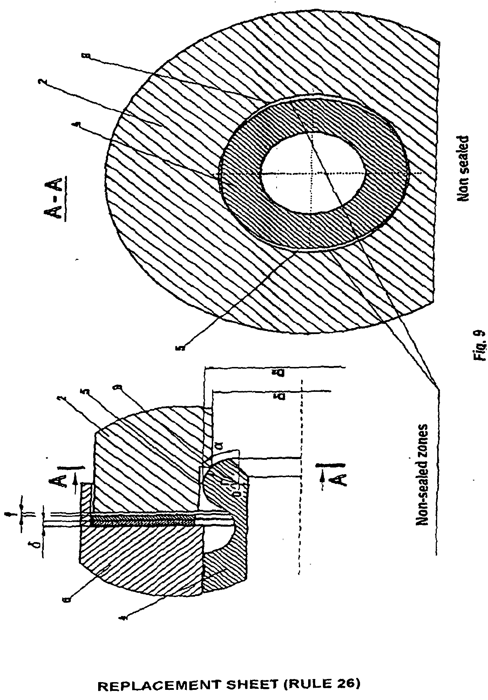

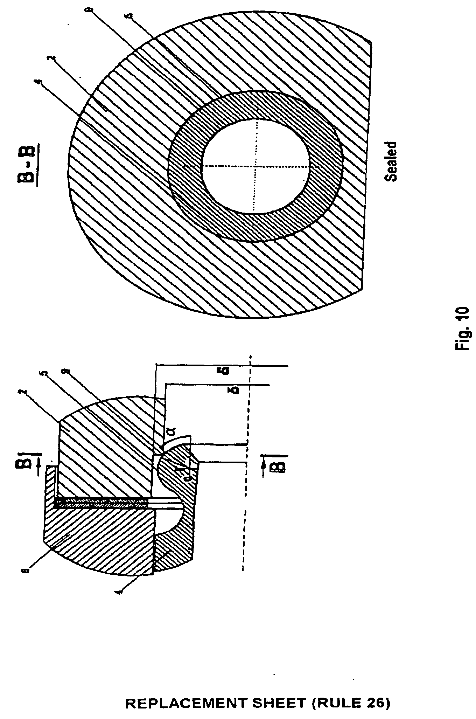

Should the elastic insert with torus-shaped projections be implemented with generating line that in the longitudinal cross-section of the insert has a form of arc of circle (Fig. 9, 10) dimensions of the elastic insert are to be chosen in accordance with the relation:

$$0 < D_2 - D_1 < 2r$$

where:

r - radius of circular arc that is formative of torus-shaped projection, mm
$D_1$ - diameter of sealing edges of pipeline inlets, mm
$D_2$ - maximum outer diameter of transverse cross-section of the elastic insert passing through torus-shaped projections, mm .

That, on the one hand, ensures the creation of necessary forces for compressing the projections in the radial direction, and, on the other hand, guarantees that a contact between sealing edges of the pipelines and torus-shaped bosses of the elastic insert during the connection sealing procedure and pipeline operation is retained. In practice, angle $\alpha$ between the line, which connects point of contact between sealing edge 8, 9 of the pipeline and torus-shaped projection 5 of elastic insert 3, 4 with center of curvature O of the arc of circle that is formative of torus-shaped projection 5 in longitudinal cross-section of the joint, and the line that is parallel to axis of the insert 3, 4 drawn through curvature center O is to be chosen within the angular range of 50° - 70°.

Elastic insert can be implemented as having one or more annular ridges 13 (Fig. 5) with convexities directed towards the longitudinal axis of the insert; in this case the ridges should be located between torus-shaped projections symmetrically to the transverse plane passing through the middle of the insert. Such insert should be used in seals with outer location of centering adapter 6 in relation to elastic insert; however, its utilization in seals with inner location of centering adapter 7 in relation to elastic insert can not be excluded, though in the latter case that would be associated with essential technological complexities.

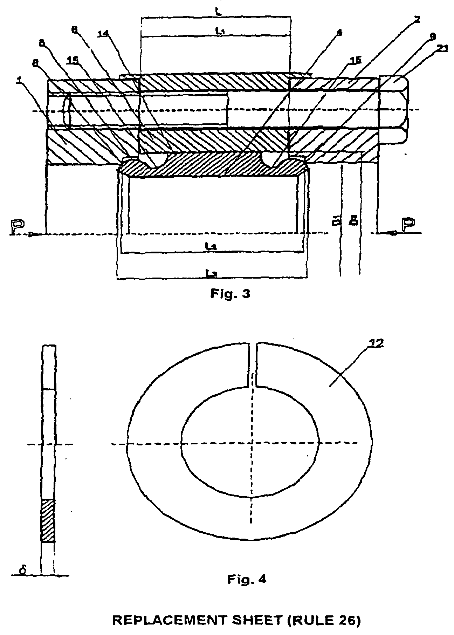

Torus-shaped projections 5 at faces of the elastic insert should better be made of a material which is harder than that of sealing edges 8, 9 of the pipeline inlets. It would be simpler if the elastic insert is made as a single whole; yet it is also admissible that torus-shaped projections and remaining portion of the elastic insert are made of different materials. The seal can be equipped with flat split adjustment rings 12 (Fig. 4), so that not less than two rings are installed on either side of centering adapter 6, 7 to bear against faces of the conjugated pipelines. In this case, when the connection is assembled, faces of the conjugated pipelines squeeze the centering adapter via adjustment rings 12. Thickness of adjustment rings $\delta$ is chosen within the range of 0,1 ... 0,2 mm. It is recommended that the hardness of the material of adjustment rings be selected not less than that of material of centering adapter and the centering adapter be made of the same material as conjugated pipelines.

In case flanged type joints 10 are employed, centering adapter 6 is installed outside the elastic insert 3, thus allowing that contact is maintained between adapter inner surface and part of outer surface of the elastic insert during their reciprocal axial movement. Elastic insert can engage in contact with centering adapter either through the surface of torus-shaped projections 5 (Fig.1) or through its middle portion (Fig.3) if it is shaped accordingly, for instance, as radial annular prominence 14 with cylindrical outer surface. In this case generating line of the outer surface of the elastic insert in the longitudinal cross-section will have at the sides the form of two cambered arcs 5 linked by concave arcs 15 with its intermediate portion 14 being a generating line of cylindrical surface. Therewith, distance $L_1$ between faces of the centering adapter is chosen to be shorter than distance $L_2$ between faces of the elastic insert, while inner diameter $D_3$ of the centering adapter to be larger than diameter $D_1$ of the sealing edges of the pipe inlets.

In case adjustment rings (Fig. 2) are employed, it is required that integral distance L between faces of the centering adapter and integral thickness of the adjustment rings installed at both ends of the centering adapter be less than distance $L_2$ between end faces of the elastic insert, i.e.

$$L = L_1 + n\delta < L_2,$$

where:

L - integral distance that determines fixed magnitude of clearance between the pipelines, mm
$L_1$ - distance between faces of the centering adapter, mm
$L_2$ - distance between faces of the elastic insert, mm
$\delta$ - thickness of an adjustment ring, mm
n - number of adjustment rings.

If coupled type joints 11 (Fig.6) are employed, centering adapter 7 is installed inside elastic insert 4 allowing that the adapter is engaged, through its outer surface, in contact with the inner surface of elastic insert 4 during their reciprocal axial movement. Distance $L_4$ between inner butt surfaces of the centering adapter is larger than distance $L_2$ between butt surfaces of the elastic insert whereas outer diameter $D_4$ of the centering adapter is smaller than diameter $D_1$ of sealing edges of the pipe inlets.

Centering adapter can be made as a single whole and the connection of centering adapter with elastic insert as a fixed one. But it can also be made demountable. To do that, centering adapter 7 is made of two complementing parts, one of which is constructed as insert 16 with a flange that is rigidly fixed at one of its ends and the other as detachable flange 17. After elastic insert 4 is installed on centering adapter 7, detachable flange 17 is put on the free end of the centering adapter, letting the flange to contact with the butt surface of the free end of the adapter.

For the inner location of centering adapter 7 it is expedient that radial annular protruding portion 18 be made with cylindrical outer surface bearing against inner surface of elastic insert 4; at that, this prominence should be located symmetrically in relation to transverse plane passing through the middle of the adapter and outer diameter $D_4$ of its cross-section be done smaller than diameter $D_1$ of sealing edges of the pipe inlets. In this case it is expedient to use seal elastic insert 4 with radial prominence 18 which height should not reach such magnitude, whereby it could engage in contact with other elements of the seal. Therewith, length $L_5$ of radial prominence 18 of centering adapter 7 is to be chosen as equal to length $L_6$ of radial prominence 19 of elastic insert 4.

The proposed sealing element for pressurization of demountable pipeline connections is made as an insert 3 that is elastic both in radial and axial directions and equipped with torus-shaped projections 5 at the faces of the insert and with annular compensating portion 20 in the middle of the insert (Fig. 8). Generating line of the outer surface of elastic insert 3 in longitudinal cross-section has configuration of two arcs which convexities look in the opposite direction from longitudinal axis of the insert and the arcs being linked by a concave arc with its convexity directed towards the axis of the insert. The internal surface of the insert may be either even or having a convexity directed towards the axis of the insert when the latter is made with ridge 13 in the middle of the insert. The insert is mainly done of metal; however, should it be necessary, it can be made of alternative materials, e.g. metal-ceramics, if a required compromise is ensured between material hardness, elasticity and strength properties of the insert.

The proposed sealing element is basically designed for use as part of the seal with outer location of centering adapter 6 or without it.

The proposed seal for pressurization of demountable pipeline connections and the sealing element work as follows.

In case the seal is used in flanged type connections 10 (Fig. 1, 3) the sealing element, made as insert 3 that is elastic both in radial and axial directions, is installed inside centering adapter 6 allowing both elements to remain in contact during their reciprocal axial movement. Then the seal is installed between the faces of preliminarily centered conjugated pipelines 1, 2 and pull them together, exerting pressure P. While tightening the pipelines, elastic insert 3 is free to move along longitudinal axis of centering adapter 6, whereby part of its outer surface remains in contact with internal surface of the adapter, e.g. of its torus-shaped projections 5 or of special radial prominence 14 that has cylindrical outer surface and is located in the central part of the insert. In the course of pulling pipes 1, 2 together torus-shaped bosses 5 of elastic insert 3 gradually engage into interaction with sealing edges 8, 9 of the inlets of conjugated pipelines 1, 2 which, owing to free movement of elastic insert 3 coaxially to centering adapter 6, eventually force the elastic insert to get into such position, wherein contact pressures on its torus-shaped bosses 5 become equal at both butts. Since, in order to create appropriate contact pressure to ensure tightness of the joint, it is required that distance $L_2$ between faces of the elastic insert be made larger than distance $L_3$ between sealing edges of the inlets of the conjugated pipelines; therefore, depending on pipeline design, a fixed magnitude of clearance L should be chosen, and that is preset by distance $L_1$ between faces of centering adapter 6, because pipelines tightening continues until tight contact is established between faces of conjugated pipelines 1, 2 and centering adapter 6. If the pipelines are made as shown at Fig. 1, 9 and distance $L_1$ between faces of centering adapter 6 is less than distance $L_2$ between faces of elastic insert 3, then longitudinal force of compressing elastic insert 3 causes, as a result of impact of sealing edges 8, 9 of the pipe inlets on torus-shaped projections 5 of elastic insert 3, compression of projections 5 in radial and axial directions and accordingly appearance of counter-action forces that arise due to elasticity of the insert and create contact pressures on torus-shaped projections 5. Magnitude of contact pressures is determined, first of all, by difference of distances between faces of centering adapter 6 and that of elastic insert 3 and it must be sufficient to provide all-round circular contact of sealing edges 8, 9 of the pipe inlets with torus-shaped bosses 5 of the elastic insert. Thus, while pulling pipelines 1, 2 together up to a fixed magnitude of clearance L , torus-shaped bosses 5 of the elastic insert move into sealing edges 8, 9 of the inlets along contact line and assume the configuration of the sealing edges. Taking into account that the contact line is very little, in practice it is ~ 0,2 - 0,3 mm, only minor forces are needed to create required contact pressures. As the elastic insert 3 is being compressed, the deformation of torus-shaped bosses 5 is giving sharp rise of the radius-directed forces of elasticity deformation, thus causing essential specific pressures along contact line and bringing about plasticity deformation of sealing edges 8, 9 of the pipeline inlets along the line of contact with torus-shaped projections 5 (Fig. 10).

Contact pressures, thus being developed, are quite sufficient to ensure tightness both in vacuum systems and in high pressure systems ( over 100 Bar).

From the physical point of view the sealing process can be interpreted as follows. As it is known, any body of revolution made by metal-cutting equipment is, to this or that extent, out-of-round, being, for instance, of ellipse-shaped, etc.; thus, an attempt to seal it by another body with similar defect will result in minor no-contact zones that are areas of leakage in the media being sealed (see cross-section A - A, Fig. 9) that in this case takes place between sealing edges 8, 9 of the pipeline inlets and spherical surface of torus-shaped projections 5 of elastic insert 3 along the line of their initial contact.

In the course of further applying pressing force P, clearance f (Fig. 10) is being taken out, ends of the pipelines engage in tight contact with the end surfaces of the centering adapter 6 thus forming together with it a rigid structure that can withstand mechanical and reversal thermal loads; at the same time, sealing edges 8, 9 of the inlets of the pipelines (Fig. 10), which are stiff in both radial and axial directions, are crawling over smooth and elastic surfaces of torus-shaped projections 5 of elastic insert 3, cause sagging of it against thin web 15, that serves as a mechanical isolator in relation to main body of elastic insert 3 (Fig. 10), and maintaining contact with torus-shaped projections 5 of the elastic insert and further enhancing radial bursting forces of elasticity deformation, until full contact between end faces of the pipelines and faces of the centering adapter is reached. Therewith, line of the contact between sealing edges 8, 9 of the pipe inlets and spherical surface of torus-shaped projections 5 of elastic insert 3 would fully reproduce the shape of sealing edges, including their ellipticity and other deviations from annular shape. Fixed radius-directed bursting forces of elasticity deformation, that emerge at faces of elastic insert 3, reach magnitudes sufficient for plasticity deformation to appear on sealing edges 8, 9 of the inlets of pipelines 1, 2 in the form of imprints of smooth spherical surfaces of torus-shaped projections 5 of elastic insert 3; and this is plasticity deformation that leads to final sealing of the connection, whereas accumulated fixed force of elastic deformation ensures tightness hold-up and covers up possible dimensional deviations including those appearing under substantial temperature fluctuations.

And it is quite admissible that during compression of elastic insert 3, after its torus-shaped bosses 5 at both butts engage in circular contact with sealing edges 8, 9 of the pipe inlets, elastic insert 3 would loose contact with centering adapter 6 (e.g. in case torus-shaped bosses 5 of the elastic insert bear against centering adapter, Fig. 1), because clearance between them will not exceed fractions of millimeter; and the contact would immediately be restored, should the axial pressure lessen. On achieving tight contact of faces of the conjugated pipes with faces of the centering adapter, the pipelines are fixed in this position, e.g. by bolt 21 or lug 22 connection of flanges 10. In case the elastic insert 3 has one or more annular ridges 13 (Fig, 5), incurved towards longitudinal axis of the insert, its elasticity properties increase and, apart from that, in case it is applied in high pressure systems, any increase of pressure would cause forces aiming to flatten the ridges and thus making contact pressures on torus-shaped bosses of the elastic insert to rise.

When the seal with flat split adjustment rings 12 (Fig. 2) is used the latter, numbering not less than two rings from each end of centering adapter 6, are installed between its faces and faces of conjugated pipes 1, 2, after elastic insert 3 has been put inside centering adapter 6.

In this case a fixed magnitude of clearance L between faces of the conjugated pipelines is set up taking into account integral thickness $n\delta$ of adjustment rings, and the pipelines are being pulled together until tight contact is reached between their end surfaces, faces of adjustment rings and faces of the centering adapter. Pattern of the interaction of the sealing edges of the pipe inlets with torus-shaped projections of the elastic insert remains as described earlier.

After the pipelines has been fixed in this position, tightness test is to be carried out by any known method. For instance, should the connection tightness requirements be high, the sealing quality of the pipelines may be examined by gaseous Helium hydrostatic test and checked up with Helium leakage detector. In case tightness failure has been detected, the joint is to be dismantled, contact pressures increased by removing one or several adjustment rings 12; then the joint is reassembled as specified and tightness is checked again. If necessary, the operations are repeated several times until required level of tightness in the connection is obtained. Since rings 12 are made split, cases are excluded during sealing quality examination, wherein tightness is ensured in unspecified manner, i.e. when faces of conjugated pipelines 1, 2 engage in close contact with faces of adjustment rings 12 and the latter with faces of centering adapter 6 , but not by sealing edges of inlets 8, 9 of the pipelines with torus-shaped projections 5 of elastic insert 3.

If a pipeline system is subjected to monitoring, then scheduled permanent tightness checks of the pipeline connections are carried out; and, should a leakage be detected, the joint is to be dismantled, one or several adjustment rings are to be removed, the joint is to be reassembled, its tightness checked and the pipeline system put into further operation.

Therewith, it is desirable that at least one adjustment ring remains in place at each side of the elastic insert. Otherwise, should tightness failure be detected in the joint, replacement of the elastic insert may be required.

Should the seal be used in a coupled type connection 11 (Fig. 6), the sealing element, made in the form of elastic insert 4, is installed outside centering adapter 7. The seal can be embodied as a demountable connection. In this case the centering adapter may consist of two parts, and to pressurize the connection it is necessary to assemble the seal, for what purpose the first part 16 of the centering adapter is installed inside elastic insert 4 and then detachable flange 17 is installed on the free end of the insert, with the flange being in contact with butt face of the free end of the insert. After that, the seal is installed between faces of conjugated pipelines 1, 2 and works as described above, except, that in the course of pulling the pipes together, outer part 19 of centering adapter 4 remains in contact with the inner surface of elastic insert 4 during their reciprocal axial movement.

The sealing element to pressurize demountable pipe connections, made as insert 3, that is elastic both in radial and axial directions and equipped with torus-shaped projections at the ends and annular compensating prominence 20 in the middle of the insert (Fig. 8), when utilized in the sealing device, works as described above. Chosen cross-sectional configuration of the sealing element, wherein compensation function is performed by concave arc 20, that is linked with torus-shaped projections 5, serves to increase elasticity properties of the insert, to reduce its size and preserve strength characteristics, thus assuring, if necessary, sufficient incline of the butt surface of elastic insert 3 in relation to cross-sectional plane for improved contact of torus-shaped projections 5 of the elastic insert with sealing edges 8, 9 of the pipe inlets.

For this kind of application, sealing element 3 may as well be used on its own, i.e. without centering adapter, mainly when distance $L_3$ between sealing edges 8, 9 of the pipe inlets is quite small and flanges 10 of the pipelines are equipped with cylindrical grooves 23 providing center-positioning without a centering adapter. However, if the distance $L_3$ in the joint between the sealing edges of the pipelines is essentially less than length $L_2$ of the elastic insert, then the latter must have high strength because it is to be subjected to big compression forces, that in turn, would have the effect on tightness of the joint when the sealing element is repeatedly used.

For an individual use of the sealing element it would be sufficient that elastic insert 3 is installed into centering grooves 23 in flanges 10 of the conjugated pipes and then execute tightening and fixing of the pipelines.

Industrial applicability

Utilization of the proposed technical designs allows to ensure high sealing dependability of demountable pipeline connections, that operate in deep vacuum and high pressures ( over 100 Bars) conditions, as well as under temperature extremes (from -270° C to + 600° C and higher) and in corrosive media.

The seal in full complete (elastic insert, centering adapter and adjustment rings) or in partial configuration (elastic insert and centering adapter) or just the elastic insert alone serving as a sealing element, depending on pipeline design and operational conditions, can be used as a device to be incorporated into the existing pipelines, ensuring a multiplicity of assembly-disassembly cycles of the connection without changing sealing parts ( over 100 cycles), being universal, requiring minor efforts to achieve complete tightness, having mass-production capability and being inexpensive.

These technical designs are applicable in most of the existing pipeline systems without any modifications of the latter and for various connection types. All that makes it possible to widely use the proposed technical designs both in general applications, as well as to utilize them in pipeline systems that operate with ecologically adverse media and in extreme environmental conditions, i.e. in automotive, aviation, aerospace, shipbuilding, chemical and other branches of industry.

**Claims**

1. A method to seal demountable pipe joints, that incorporates the centering of conjugated pipe ends, putting into the gap between them a sealing element, made as an elastic insert with torus-shaped protuberances at both faces, that bear against pipe inlets sealing edges, setting-up a fixed clearance between the pipe ends, centering the elastic insert, pulling the pipe ends together to a required clearance magnitude between them with simultaneous pressing of the insert in both radial and axial directions by the sealing edges of the pipe inlets until the edges come into all-round circular contact with torus-shaped projections of the insert with plastic deformation of the pipe inlets sealing edges appearing along contact line, as caused by forces of elastic deformation that occur in the elastic insert being subjected to compression in the course of tightening the pipes, and fixing the pipes in this position, wherein the centering of the elastic insert by means of installing it inside or outside a centering adapter, that is placed into the gap between the conjugated pipes coaxially in relation to the elastic insert, allowing both parts to contact each other while moving along the axial direction in order to maintain centering and preventing the centering adapter from transverse movements; and, when the pipes are being pulled together, by equalizing contact pressure at torus-shaped projections of the elastic insert by moving it coaxially in relation to the centering adapter under the impact of sealing edges of the pipe inlets up to a moment of all-round contact between the faces of the conjugated pipes and the faces of the centering adapter.

2. A method to seal demountable pipe joints, that incorporates centering of conjugated pipelines, putting into the gap between them a sealing element, made in the form of an elastic insert with torus-shaped projections at both faces and that bear against pipe inlets sealing edges, setting-up a fixed clearance between the pipe ends, centering the elastic insert, pulling the pipe ends together to a required clearance magnitude between them with simultaneous pressing of the insert in both radial and axial directions by the sealing edges of the pipe inlets until the edges come into all-round circular contact with torus-shaped protuberances of the insert and plastic deformation of the pipe holes sealing edges becomes emergent along contact line, as caused by forces of elastic deformation occurring in the elastic insert under pressure in the course pulling the pipes together, and fixing the pipes tight in this position, wherein centering of the elastic insert through installing it inside or outside the centering adapter, placed into a gap between the conjugated pipes in coaxial manner with regard to the elastic insert, allowing both parts to stay in contact when moving one along another in axial direction to maintain centering and to prevent transverse movement of the centering adapter, wherein setting of a fixed magnitude of clearance between pipes is adjusted with flat split washers, that, prior to pulling the pipes together, are placed between the faces of the conjugated pipes and the faces of the centering adapter with the number of washers at each face of the centering adapter being not less than two; and in the course of pulling the pipes together equalizing of the contact pressures at torus-shaped projections of the elastic insert through its coaxial movement under the impact of the sealing edges of the pipe inlets up to a moment of all-round contact between the faces of the conjugated pipes, the adjusting washers and the faces of the centering adapter; and upon fixing the pipes in this position checking of the air-tightness of the joint, and, should it prove faulty, the joint is to be dismantled and contact pressures at torus-shaped projections of the elastic insert enhanced by decreasing a fixed magnitude of clearance between the pipes by means of removing one or several adjusting washers and resuming of the mentioned sealing operations of the pipe ends until a required degree of sealing is reached with at least one adjusting washer remaining at each face of the centering adapter.

3. A sealing device for demountable pipe joints containing a sealing element as an insert that is elastic in radial and axial directions and equipped with torus-shaped projections at the faces of the insert, which bear against sealing edges of the pipe inlets of the conjugated pipes wherein application of a centering adapter, placed coaxially in relation to the elastic insert and making it possible for both of them to remain in contact in the course of their reciprocal movement in axial direction.

4. The seal of claim 3 wherein a greater distance between the faces of the elastic insert in comparison with the distance between the sealing edges of the pipe inlets of the conjugated pipes.

5. The of claim 3 wherein the elastic insert embodiment with one or more annular ridges protuberating in axial direction with regard to the insert and with those ridges being symmetrically located between torus-shaped projections as can be seen in transverse cross section going through the middle of the insert.

6. The seal of claim 3 wherein the torus-shaped projections at the faces of the elastic insert made from material, which hardness is greater than that of the material of which the sealing edges of the pipe inlets are made.

7. The seal of claim 3 wherein the flat split adjustment rings are used, made of a material which hardness is not lower than that of a material of the centering adapter, and the rings are put coaxially in relation to the centering adapter between its faces and faces of the conjugated pipes.

8. The seal of claim 3 wherein the centering adapter is made of the same material as the conjugated pipes.

9. The seal of claim 3 wherein the centering adapter is installed outside the elastic insert, providing a possibility of contact between its internal surface with a part of the external surface of the elastic insert during their reciprocal movement, while the distance between the faces of the centering adapter is less than the distance between the faces of the elastic insert, wherein the inner diameter of the centering adapter is larger than the diameter of the sealing edges of the pipe inlets.

10. The seal of claims 7 or 9 wherein the total distance between faces of the centering adapter and integral thickness of the adjustment rings, placed at both faces of the centering adapter, is less than the distance between the faces of the elastic insert.

11. The seal of claim 3 wherein the centering adapter is installed inside the elastic insert, allowing a part of its outer surface to contact with the inner surface of the elastic insert during their reciprocal movement in axial direction, and a distance between inner butt surfaces of the centering adapter is larger than a distance between end surfaces of the elastic insert, and the external diameter of the centering adapter is less than the diameter of the sealing edges of the pipe inlets.

12. The seal of claim 11 wherein the centering adapter is made of two complementing parts, one of which is embodied as an insert with a flange fixed tight at one of its ends, while the other part is embodied as a flange set free at the opposite end of the insert and that can have contact with the end surface of the insert.

13. The seal of claim 11 wherein the centering adapter has on its outer surface a radial circular prominence with cylindrical external surface that bears against inner surface of the elastic insert and with the prominence located symmetrically in relation to transverse cross section, going through the middle of the insert, and with the prominence outer diameter as per the cross section is less than that of the sealing edges of the pipe inlets.

14. A sealing element to pressurize demountable pipe joints embodied as an insert that is elastic both in radial and axial directions and that has torus-shaped projections at its both faces and a circular compensating portion in the middle of the insert wherein the generating line of the outer surface of the elastic insert in its longitudinal cross section has a form of two arcs with their convexity directed outward with regard to the longitudinal axis of the insert and that are linked by another arc, convexity of which is directed inward with regard to the axis of the insert.

EP 1 156 255 A1

Fig. 1

Fig. 2

**REPLACEMENT SHEET (RULE 26)**

15

EP 1 156 255 A1

Fig. 3

Fig. 4

REPLACEMENT SHEET (RULE 26)

16

**Fig. 5**

**Fig. 6**

REPLACEMENT SHEET (RULE 26)

Fig. 7

Fig. 8

**REPLACEMENT SHEET (RULE 26)**

18

A - A

Non sealed

Non-sealed zones

Fig. 9

REPLACEMENT SHEET (RULE 26)

EP 1 156 255 A1

B - B

Sealed

Fig. 10

REPLACEMENT SHEET (RULE 26)

20

| | International application No. |
|---|---|
| | PCT/RU 99/00465 |

**A. CLASSIFICATION OF SUBJECT MATTER [6]:**
F16L 23/00, F16L 19/00, F16L 21/00

According to International Patent Classification (IPC) or to both national classification and IPC

**B. FIELDS SEARCHED**

Minimum documentation searched (classification system followed by classification symbols)
F16L 23/00, 23/02, 19/00, 19/025, 21/00, 21/06, 17/00, 17/06, F16J, 15/00, 15,08, E21B 33/00, 33/03

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2073164 C1 (KOGAN B.M. et al) 10 October 1997 (10.02.97) | 1-6 |
| A | US 4214763 A (RAYMIND E. LATHAM) 29 July 1980 (29.07.80) | 1-4 |
| A | SU 511469 A (EMELYANOV A.I.) 02 September 1976 (02.09.76) | 1-4 |
| A | WO 83/03883 A1 (FMC CORPORATION) 10 November 1983 (10.11.83) | 1-6 |
| A | DE 2416808 B2 (LEYBOLD-HERAEUS GMBH) 16 October 1975 (16.10.75) | 1-3, 7-9, 11, 13, |
| A | RU 2044207 C1 (KOGAN B.M.)29 September 1995 (29.09.95) | 1-6, 14 |
| A | SU 1416788 A1 (NPO PO TERMICHESKIM METODAM DOBYCHI NEFTI "SOJUZTERMNEFT")15 August 1988 (15.08.88) | 1-3, 5 |

-/--

☐ Further documents are listed in the continuation of Box C.          ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search<br>01 March 2000 (01.03.00) | Date of mailing of the international search report<br>30 March 2000 (30.03.00) |
|---|---|
| Name and mailing address of the ISA/<br><br>R.U<br><br>Facsimile No. | Authorized officer<br><br><br>Telephone No. |

Form PCT/ISA/210 (second sheet) (July 1992)                              page 1 of 2